# EUROPEAN PATENT APPLICATION

(11) **EP 3 692 868 A1**
(43) Date of publication of application: **12.08.2020**
(21) Application number: 19156471.5
(22) Date of filing: 11.02.2019
(51) Int. Cl.: A47J 31/42

(54) **AUTOMATIC COFFEE MACHINE**

(71) Applicant: BSH Hausgeräte GmbH, 81739 München (DE)
(72) Inventor: Henz, Manuel, 83410 Laufen (DE); Winkler, Gerhard, 83334 Inzell (DE); Quittek, Benno, 83278 Traunstein (DE)

(57) **Abstract**

An automatic coffee machine (10) comprising a coffee beans chamber (11) for receiving coffee beans, a grinder (12) for grinding the coffee beans, a brewing unit (14), a ground coffee transportation channel (13) for transportation of the ground coffee beans from the grinder (12) to the brewing unit (14), an air ventilation system and a blower (15) which is in fluid connection with the ground coffee transportation channel (13) wherein, the blower (15) is placed in the vicinity of the ground coffee transportation channel (13) for separation the coarse particles from the fines particles of the ground coffee and the blower (15) redirects the fines particles to a fines separator (16).

## Description

### Field of the invention

The invention relates to an automatic coffee machine comprising a coffee beans chamber for receiving coffee beans, a grinder for grinding the coffee beans, a brewing unit, a ground coffee transportation channel for transportation of the ground coffee beans from the grinder to the brewing unit, an air ventilation system and a blower which is in fluid connection with the ground coffee transportation channel.

### State of the art

The patent application EP 0 386 267 A1 discloses a coffee maker capable of obtaining automatically coffee from raw coffee beans. The coffee maker includes a roaster for storing the raw coffee beans and roasting them to the coffee beans; a mill-extractor for milling the roasted coffee beans and extracting a coffee liquid from the milled coffee beans; a blower for sending air into the main body of a container of the extractor and cooling the coffee beans before the extraction; a hot water pouring device for pouring hot water to the coffee beans inside the extractor after milling of the coffee beans and extracting coffee liquid; a coffee server for storing the coffee; and means for suppling the coffee from the extractor to the coffee server. Driving of the roaster, the supply of the coffee beans from the roaster to the extractor and driving of the extractor, blower and hot water pouring device are effected automatically at predetermined timings.

The patent application EP 2 361 540 A1 shows the machine which has a bean container for suppling coffee beans. A duct and a blower are arranged between the bean container and a grinder and between the grinder and a brewing chamber for transport of the coffee beans. A conveying direction of the duct and blower is provided from the grinder to the container. The duct extends over a transport- and/or conveying path of the beans. An airflow-based transport device is formed for loading the container, and a retention grid is arranged above the grinder.

The patent US 7 252 033 B1 discloses a coffee maker which includes a valve mechanism having a micro switch, an electromagnetic valve, a magnetic covering board activated by the electromagnetic valve for opening or closing a powder path, and a spring interconnecting the covering board and the electromagnetic valve. A motor-driven grinding mechanism includes two ring-shaped outer grinding members having teeth facing each other, and a spring biased inner grinding member including a hollow feed rod with a lead screw formed thereon. A powder fineness adjusting mechanism includes an adjustment lever. In a powder fineness adjustment for producing coarse coffee powder, pivoting the lever toward one direction will pivot an abutment member and move the same outward to push one grinding member for increasing a space between the grinding members filled with coffee beans to be ground. Pivoting the lever toward the other direction will produce fine coffee powder.

Presented solutions do not provide a reliable and cost effective device for preparing a good quality beverage.

### The aim of the invention

It is the object of the present invention to provide a further development with an advantage over the state of the art and provide an automatic coffee machine which provides a beverage with a good quality.

### Summary of the invention

The object is solved by an automatic coffee machine whereby the blower is placed in the vicinity of the ground coffee transportation channel for separation the coarse particles from the fines particles of the ground coffee and the blower redirects the fines particles to a fines separator.
The automatic coffee machine comprises a coffee beans chamber, a grinder, a brewing unit, a ground coffee transportation channel, an air ventilation system and a blower.
The coffee beans chamber is provided for receiving the coffee beans delivered by the user. The grinder is provided for grinding the coffee beans and the advantage for the user is that the grinding process is performed right before the brewing process which influences the taste and quality of the prepared beverage.

The brewing unit is a part of the coffee machine in which a brewing process is performed. The ground coffee transportation channel transports the ground coffee beans from the grinder to the brewing unit in order to perform the brewing process.
The air ventilation system is provided to ensure the aroma flow outside the coffee machine in order to reach the user.
The blower is in fluid connection with the ground coffee transportation channel and the fines separator what means that the air flow through them is possible. After the grinding process the ground coffee falls down through the transportation channel to the brewing unit by the force of gravity. The ground coffee comprises not only coarse particles which are desired for good quality of the beverage but also fines particles which are not desirable in big amount. By reducing the fines particles, other factors that increase the brewing pressure can be further exploited without exceeding the maximum pressure limits of the system. The fines particles are lighter than the coarse particles therefore blowing process is very efficient.
The fines separator is a simple tube or funnel which is in fluid connection with the ground coffee transportation channel through which the fines particles falls down after being separated from the coarse particles.

In the preferred embodiment of the invention the fines particles are redirected through the fines separator to a fines container which is removably connected to the coffee machine. The fines separator is provided to lead the fines particles to the fines container. The fines container is placed inside the coffee machine body and is removably connected to the coffee machine because it is required to emptied the fines container periodically by the user.

In the preferred embodiment of the invention the inlet of the fines separator and the blower are placed on the opposite sides of the ground coffee transportation channel at the same height. Such arrangement of the fines separator and the blower provides an efficient separation of the grounded coffee particles.

In the preferred embodiment of the invention the direction of the air stream created by the blower is perpendicular to the direction of coffee particles falling inside the ground coffee transportation channel. The coffee particles after grinding falls down the transportation channel. When the coffee particles meet the air blow which is perpendicular to falling direction, the lighter particles are redirected to the fines separator and heavier particles falls down to the brewing unit. The separation of the grounded coffee particles is performed in easy but efficient way.

In another embodiment of the invention, the air ventilation system has plurality of openings directed towards consumer for the aroma distribution.
By the air ventilation system the coffee aroma which is released during grinding process is distributed to the consumer by the plurality of openings placed on the housing of the coffee machine. The openings are located on the housing of the coffee machine preferably on the front or upper side of the coffee machine for better distribution of the coffee aroma. The positive effect is that during the beverage preparation the consumer can smell the aroma of fresh coffee what influences the consumer satisfaction.

In the preferred embodiment of the invention a filtering element is placed inside the ground coffee transportation channel between the grinder and the blower for initial filtration of the grounded coffee. The filtering element is made out of metal or plastic mesh and is provided for initial segregation of the ground coffee particles before reaching the air blow coming from the blower. The positive effect of such arrangement is that the segregation of the coffee particles is more efficient.

### Brief description of the figures

The construction of the invention, however, together with additional object and corresponding advantages will be best understood from the following description of specific embodiments and in connection with the accompanying drawing.

In the drawing:
- Fig. 1: shows a coffee machine in isometric view
- Fig. 2: shows a schematic view of the grounded coffee path inside the coffee machine

### Detailed description of the invention

In cooperation with attached drawing, the technical contents and detailed description of the present invention are described thereinafter according to a preferable embodiment, being not use to limit its executing scope. Any equivalent variation and modification made according to appended claims is all covered by the claims claimed by the present invention.

In the following description of the preferred embodiments of the present invention, similar identical reference numbers designate identical or comparable components.

The automatic coffee machines are devices which are commonly used not only in a households but also in restaurants, catering organizations and other high volume food production institutions. Typically, automatic coffee machines have a body with removable water tank, a coffee beans chamber, a grinder for grinding the coffee beans, brewing unit, a milk frothing unit and plurality of different elements which are necessary to perform the brewing process.

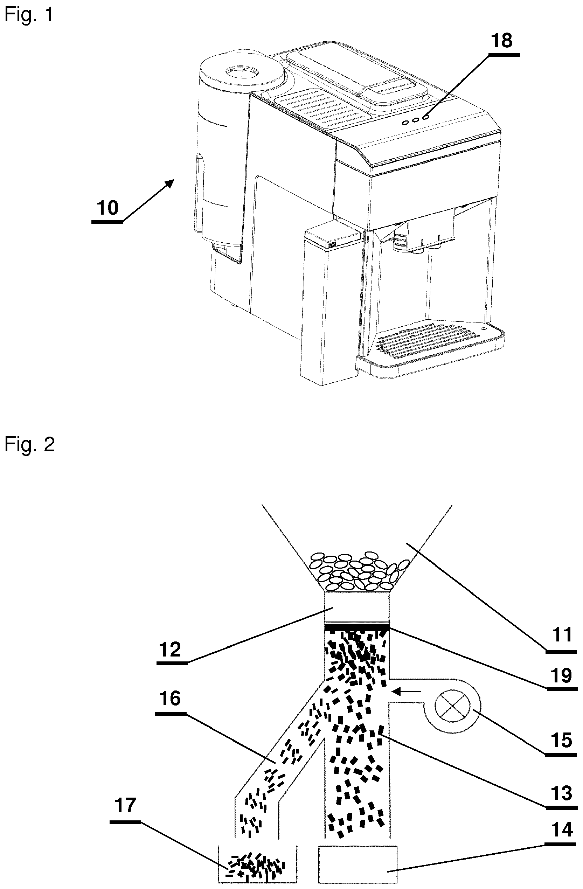

Fig. 1 shows a coffee machine 10 in isometric view with visible openings 18. The openings are placed on the top side of the coffee machine 10 and the openings 18 are placed in such a way that are directed towards the consumer which is able to smell the aroma coming out of the coffee machine 10 body.

Fig. 2 shows a schematic view of the grounded coffee path inside the coffee machine 10. The coffee beans are stored in the coffee beans chamber 11. The coffee beans form the coffee beans chamber 11 are grinded by the grinder 12 which is placed right under the coffee beans chamber 11. The grinder is activated by the user. Under the grinder 12 the filtering element 19 is provided in order to make a preliminary segregation of the coffee particles. Next, the grounded coffee particles falls down through the transportation channel 13 by the force of gravity. The blower 15 is placed in the vicinity of the transportation channel 13 and the blower 15 is in fluid connection with the grounded coffee transportation channel 13. The transportation channel 13 leads the particles of the grounded coffee to the brewing unit 14. The transportation channel 13 is connected also with the fines separator 16. The fines separator 16 is a channel which is connected to the transportation channel 13 on the opposite side of the blower 15, at the same height. The blower 15 blows into the grounded coffee particles which were previously grinded and after getting through the filtering element 19. As the fines particles are lighter than the coarse particles the fines particles are easily redirected by the air stream from the blower 15 to the fines separator 16. From the fines separator 16 the fines particles go to the fines container 17. The fines container 17 is a small element placed inside the coffee machine body. The fines container 17 can be removed from the coffee machine in order to dispose the fines particles of the ground coffee and perform maintenance activities e.g. cleaning. The coarse particles of the ground coffee falls down through the transportation channel 13 to the brewing unit 14 in order to perform the brewing process.

### LIST OF REFERENCE SIGNS

- 10: coffee machine
- 11: coffee beans chamber
- 12: grinder
- 13: transportation channel
- 14: brewing unit
- 15: blower
- 16: fines separator
- 17: fines container
- 18: openings
- 19: filtering element

## Claims

1. An automatic coffee machine (10) comprising a coffee beans chamber (11) for receiving coffee beans, a grinder (12) for grinding the coffee beans, a brewing unit (14), a ground coffee transportation channel (13) for transportation of the ground coffee beans from the grinder (12) to the brewing unit (14), an air ventilation system and a blower (15) which is in fluid connection with the ground coffee transportation channel (13) **characterized in that** the blower (15) is placed in the vicinity of the ground coffee transportation channel (13) for separation the coarse particles from the fines particles of the ground coffee and the blower (15) redirects the fines particles to a fines separator (16).

2. The automatic coffee machine (10) according to claim 1, **characterized in that** the fines particles are redirected through the fines separator (16) to a fines container (17) which is removably connected to the coffee machine (10).

3. The automatic coffee machine (10) according to any of the preceding claims, **characterized in that** the inlet of the fines separator (16) and the blower (15) are placed on the opposite sides of the ground coffee transportation channel (13) at the same height.

4. The automatic coffee machine (10) according to any of the preceding claims, **characterized in that** the direction of the air stream created by the blower (15) is perpendicular to the direction of coffee particles falling inside the ground coffee transportation channel (13).

5. The automatic coffee machine (10) according to any of the preceding claims, **characterized in that** the air ventilation system has plurality of openings (18) directed towards consumer for the aroma distribution.

6. The automatic coffee machine (10) according to any of preceding claims, **characterized in that** a filtering element (19) is placed inside the ground coffee transportation channel (13) between the grinder (12) and the blower (15) for initial filtration of the grounded coffee.
